Europäisches Patentamt

European Patent Office

Office européen des brevets

(11) Numéro de publication: **0 076 191**
**B1**

## (12) FASCICULE DE BREVET EUROPEEN

(45) Date de publication du fascicule du brevet: **29.01.86**

(21) Numéro de dépôt: **82401679.4**

(22) Date de dépôt: **16.09.82**

(51) Int. Cl.⁴: **G 09 F 7/10,** G 09 F 3/20 //
G09F1/10

(54) Equipement pour l'affichage en hauteur d'éléments supports d'informations amovibles.

(30) Priorité: **25.09.81 FR 8118084**

(43) Date de publication de la demande:
**06.04.83 Bulletin 83/14**

(45) Mention de la délivrance du brevet:
**29.01.86 Bulletin 86/05**

(84) Etats contractants désignés:
**DE GB IT**

(56) Documents cités:
**BE-A- 384 319
DE-A-2 433 443
FR-A- 508 377
FR-A-1 183 558
FR-A-1 347 468
FR-E- 90 642**

(73) Titulaire: **Société d'Equipement pour
l'Expansion de Magasins (SEPEM) S.A.
14, rue des Bois
F-92220 Bagneux (FR)**

(72) Inventeur: **Virginio, Arménio
1, rue Morte Bouteille
F-78140 Velizy (FR)**

(74) Mandataire: **Barbin le Bourhis, Joel
Société Internationale 19, rue de la Paix
F-75002 Paris (FR)**

Courier Press, Leamington Spa, England.

EP 0 076 191 B1

## Description

La présente invention est du domaine de l'affichage. Elle vise plus précisément un équipement d'affichage en hauteur d'éléments supports d'informations amovibles, du type utilisé par exemple pour le support d'étiquettes dans les magasins en libre-service.

L'affichage en hauteur des informations, notamment l'affichage des prix duns les magasins en libre-service, présente un certain nombre de difficultés de manipulation, en particulier lorsque l'on doit procéder à un changement d'étiquetage, opération qui se reproduit assez fréquemment. En effet, cet affichage en hauteur nécessite l'utilisatibn de moyens de support à tige de guidage ou à glissière appropriée, ce qui se traduit par une certaine perte de temps lors des manipulations, du fait que le panneau support d'affichage doit être amené au sol de façon à permettre à l'opérateur d'effectuer les changements d'étiquettes désirés, après quoi le panneau doit être remonté à son niveau d'emplacement d'origine. Par ailleurs, le document de brevet français n° 90.642 divulgue un panneau et une réglette venant se verrouiller sur des pattes faisant saillie sur le panneau, la réglette recevant des caractères reproduisant un message. Cependant, les moyens d'accrochage et de verrouillage de la réglette sont très complexes et impossibles à actionner si le panneau est disposé en hauteur.

La présente invention vise à obvier à ces inconvénients de manutention des dispositifs d'affichage en hauteur de l'art antérieur en fournissant un système simple et ne nécessitant pas de manipulations compliquées et longues, tout en restant d'un prix de revient nettement moins élevé que les dispositifs du commerce.

Dans cet esprit, l'invention concerne un équipement pour l'affichage en hauteur d'éléments supports d'informations amovibles, comportant un tableau sur lequel est montée une paire de pattes ou boutons destinée à supporter un élément support de moyens d'information, ledit élément support étant mobile, caractérisé en ce que ledit élément support est une règle en profilé creux connu en soi, ouvert su l'une de ses faces destinée à être orientée vers le bas de façon à ménager deux zones support et en ce que chaque moyen d'information est en forme d'étiquette, plaquette ou tablette et est muni le long de son bord supérieur d'un élément approprié susceptible de venir prendre appui sui lesdites zones supports de façon à pendre librement sous ledit élément support, ce dernier étant lui-même essentiellement posé sur ladite paire de pattes ou boutons et en ce qu'il comporte en outre une perche conformée pour coopérer avec ledit élément support et permettre l'accrochage et le décrochage de ce dernier.

L'invention sera mieux compris à la lecture de la description non limitative suivante d'une forme de réalisation particulière de dispositif d'affichage, en référence au dessin annexé dans lequel:

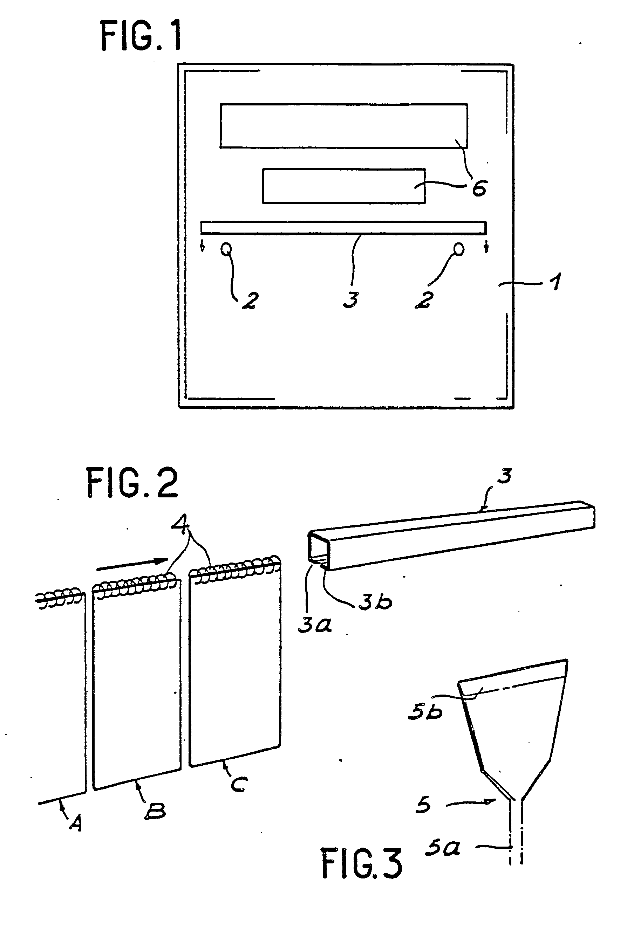

— la figure 1 est une vue en plan du dispositif d'affichage selon l'invention;
— la figure 2 est une vue en perspective de la règle support d'étiquette représentée dans le dispositif d'affichage de la figure 1;
— la figure 3 est une vue en plan de la perche d'accrochage et de décrochage de la règle support de la figure 2.

Sur un panneau d'affichage 1, sont montés de pattes ou boutons d'accrochage 2 destinés à recevoir l'élément rectiligne ou règle 3 obtenu avantageusement à partir d'un profilé creux ouvert sur une de ses faces, de façon à y ménager des zones supports 3a, 3b, sur lesquelles viendront s'appuyer des éléments spiralés 4 montés de façon appropriée sur les bords supérieurs des plaquettes ou étiquettes A, B, C. La dite règle est connue en soi. Ce profilé creux est avantageusement en un matériau présentant des caractéristiques de résistance mécanique appropriées, par exemple un alliage de fer ou d'aluminium ou analogue.

Lorsque le panneau l'affichage 1 est disposé en hauteur, on a également prévu, selon la présente invention, pour le décrochage ou le réaccrochage de la règle 3, une perche comportant un manche 5a dont l'extrémité se prolonge par une zone plate 5b présentant une arête supérieure rectiligne biseautée de façon à pouvoir s'insérer dans la saignée limitée par les zones supports 3a, 3b de la règle 3. Ainsi, par un simple mouvement ascendant et descendant de la perche 5, on peut amener au niveau de l'opérateur la règle 3 et ce dernier peut procéder au changement des étiquettes A, B, C avant de procéder au réaccrochage de ladite règle 3.

Il est clair que l'invention n'est nullement limitée à la forme de réalisation décrite ci-dessus en référence au dessin annexé, mais qu'elle englobe toutes les modifications et variantes à la portée de l'homme de l'art, issues du même principe de base. C'est ainsi, par exemple, que dans des zones 6 du panneau on peut prévoir soit des glissières destinées à recevoir des indications, informations ou slogans, ou bien d'autres pattes supports pour l'accrochage d'une autre règle support d'étiquette. Par ailleurs, bien que ce dispositif d'affichage ait été conçu pour les points de vente en libre-service, les grands magasins ou magasins à grande surface, il peut être également utilisé dans tous les endroits ou édifices publics ou privés où l'information doit pouvoir être communiquée rapidement et modifiée selon les circonstances pourle public, par exemple eans les bourses, les champs de courses, les stades ou analogues.

## Revendication

Equipement pour l'affichage en hauteur d'éléments supports d'informations amovibles, comportant un tableau (1) sur lequel est montée une paire de pattes ou boutons (2) destinée à supporter un élément support (3) de moyens d'information, ledit élément support étant mobile, caractérisé en ce que ledit élément support (3) est une règle en profilé creux, ouvert sur l'une de ses faces destinée à être orientée vers le bas de façon à ménager deux zones support (3a, 3b) et en ce que chaque moyen d'information (A, B, C) est en forme d'étiquette, plaquette ou tablette et est muni le long de son bord supérieur d'un élément approprié (4) susceptible de venir prendre appui sur lesdites zones supports de façon à pendre librement sous ledit élément support (3), ce dernier étant lui-même essentiellement posé sur ladite paire de pattes ou boutons et en ce qu'il comporte en outre une perche (5) conformée pour coopérer avec ledit élément support (3) et permettre l'accrochage et le décrochage de ce dernier.

## Patentanspruch

Hoch aufhängbare Anschlagtafel zur Anbringung auswechselbarer Informationsträger, an welcher ein Paar Haken oder Knöpfe (2) od.dgl. angeordnet ist, auf welchen ein die Informationsträger (A, B, C) tragendes Element (3) abnehmbar aufliegt, dadurch gekennzeichnet, daß das Tragelement (3) aus einer hohlen Profilschiene besteht, in deren Unterseite sich ein sich über dessen ganze Länge erstreckender Schlitz befindet, zu dessen beiden Seiten Stützflächen (3a, 3b) vorhanden sind, und daß jeder Informationsträger (A, B, C) in der Form eines Etiketts einer kleinen Tafel oder Platte an seinem oberen Rand mit einem sich auf den Stützflächen (3a, 3b) der geschlitzten Profilschiene abstützenden Element (4) versehen ist, so daß die Informationsträger (A, B, C) von der auf den Haken oder Knöpfen (2) aufliegenden, mittels einer an der Profilschiene ansetzbaren Stange (5) auf diese auflegbaren bzw. von diesen abhebbaren Profilschiene frei nach unten hängen.

## Claim

Equipment for displaying removable information carrying elements heightwise, comprising a table (1) on which is mounted a pair of lugs or buttons (2) intended to support an information means carrying element (3), said carrying element being mobile, characterized in that said carrying element (3) is a hollow extruded section bar open in one of its faces intended to be orientated downwards so as to form two support zones (3a, 3b) and in that each information means (A, B, C) is in the form of a docket, a thin booklet or writing tablet and is provided along its upper edge with an appropriate element (4) adapted for bearing on said support zones so as to hang freely under said carrying element (3), this latter being itself essentially laid on said pair of lugs or buttons and in that it further comprises a pole (5) adapted for cooperation with said carrying element (3) for hooking on or removing this latter.

# FIG.1

# FIG.2

# FIG.3